# FASCICULE DE BREVET EUROPEEN

(11) **EP 1 739 317 B1**
(45) Date de publication et mention de la délivrance du brevet: **19.12.2007**
(21) Numéro de dépôt: 06290766.2
(22) Date de dépôt: 12.05.2006
(51) Int. Cl.: F16C 19/52, G01P 3/44

(54) **Dispositif de roulement instrumenté**
Instrumentierte Lagervorrichtung
Instrumented bearing device

(30) Priorité: 29.06.2005 FR 0506660
(43) Date de publication de la demande: 03.01.2007
(73) Titulaire: Aktiebolaget SKF, 415 50 Göteborg (SE)
(72) Inventeur: Chaussat, Sylvain, 37000 Tours (FR)
(74) Mandataire: Casalonga, Axel

(56) Documents cités:
- EP-A- 1 164 318
- EP-A- 1 304 575
- FR-A- 2 754 903
- FR-A- 2 806 764
- US-B1- 6 655 844
- PATENT ABSTRACTS OF JAPAN vol. 2002, no. 12, 12 décembre 2002 (2002-12-12) & JP 2002 227860 A (KOYO SEIKO CO LTD), 14 août 2002 (2002-08-14)

## Description

La présente invention concerne le domaine des paliers à roulement instrumentés munis d'un dispositif de détection des paramètres de rotation, en particulier les roulements instrumentés comportant un bloc-capteur ou corps de capteur disposé d'un côté du roulement et fixé dans une rainure annulaire ménagée sur la bague extérieure non tournante du roulement.

Ce type de roulement est connu en soi et est utilisé dans de nombreuses applications, dans lesquelles on souhaite connaître certains paramètres de rotation, par exemple la vitesse, le déplacement, l'accélération angulaire, d'une pièce tournante par rapport à une pièce fixe.

Un roulement instrumenté comporte généralement un anneau codeur solidaire de la bague tournante du roulement et défilant par rotation devant un ou des capteurs logés dans un bloc-capteur solidaire de la bague non tournante du roulement.

Le document FR-A-2 754 903 (SKF France) décrit un roulement instrumenté optimisé pour les hautes vitesses et les hautes températures de fonctionnement. Le capteur pris dans son ensemble comprend une sonde à effet Hall, un bloc support en matériau synthétique et une coupelle métallique sertie dans la rainure de la bague extérieure pour assurer la fixation du bloc support. Ce mode de fixation peut convenir dans de nombreuses applications, mais peut s'avérer insuffisant lorsque les risques de pollution en provenance de l'extérieur sont élevés.

Le document FR-A-2 806 764 (SKF France) décrit un palier à roulement instrumenté, comprenant un capteur pourvu d'un bloc-capteur, d'un support métallique du bloc-capteur avec un rebord du support serti dans une rainure de la bague non tournante, un flasque annulaire d'étanchéité de forme générale radiale étant monté radialement à l'intérieur du rebord serti du support de fixation du bloc-capteur, le flasque se terminant vers l'extérieur par un rebord oblique ou par un bourrelet annulaire en caoutchouc ou en élastomère. Cependant, dans les roulements de faibles dimensions, le positionnement correct et la retenue du flasque dans le support métallique, peuvent être difficiles à assurer.

L'invention vise à remédier aux inconvénients des dispositifs de l'art antérieur.

L'invention propose un roulement instrumenté assurant une fixation fiable et économique à mettre en oeuvre et une étanchéité de haut niveau.

Le dispositif de palier instrumenté est du type pourvu d'une partie non tournante comprenant une bague non tournante et un capteur, d'une partie tournante comprenant une bague tournante et un codeur et d'au moins une rangée d'éléments roulants disposés entre deux chemins de roulement des bagues non tournante et tournante, le capteur étant fixé dans une rainure de la partie non tournante disposée à proximité d'une face latérale radiale de ladite partie non tournante. Le capteur comprend un élément de liaison et un bloc-capteur. L'élément de liaison est rapporté à l'état plastique sur le bloc-capteur pour assurer la fixation sur une face latérale de la partie non tournante. L'élément de liaison assure, à l'état durci, la fixation du bloc-capteur sur la partie non tournante en coopérant par complémentarité de forme à la fois avec des surfaces du bloc capteur et des surfaces de la partie non tournante.

Le dispositif de palier instrumenté est du type pourvu d'une partie non tournante comprenant une bague non tournante et un capteur, d'une partie tournante comprenant une bague tournante et un codeur et d'au moins une rangée d'éléments roulants disposés entre deux chemins de roulement des bagues non tournante et tournante, le capteur étant fixé dans une rainure de la partie non tournante disposée à proximité d'une face latérale radiale de ladite partie non tournante. Le capteur comprend un élément de liaison en matériau synthétique et un bloc-capteur, l'élément de liaison étant rapporté sur le bloc-capteur pour assurer la fixation sur une face latérale de la partie non tournante. L'élément de liaison assure, à l'état durci, la fixation du bloc-capteur sur la partie non tournante.

L'élément de liaison peut donc être introduit dans le bloc-capteur dans un état liquide ou pâteux et durcir par la suite, d'où une excellente concordance de forme entre la partie non tournante et l'élément de liaison et une étanchéité tout à fait satisfaisante.

Dans un mode de réalisation, le bloc-capteur comporte des orifices débouchant dans une rainure de la partie non tournante, par exemple de la bague non tournante. La bague non tournante peut être pourvue de deux rainures annulaires symétriques par rapport au plan fictif passant par le centre des éléments roulants, l'une des rainures servant à la fixation d'un joint d'étanchéité et l'autre servant à la fixation du capteur. Une rainure peut à la fois servir à supporter un organe d'étanchéité et le capteur. L'organe d'étanchéité peut se présenter sous la forme d'un flasque.

Des orifices peuvent être ménagés à partir d'une partie évidée du bloc-capteur ouverte sur une face extérieure du roulement. On peut ainsi introduire le matériau de l'élément de liaison de façon aisée.

Dans un mode de réalisation, le bloc-capteur comprend une face d'appui en contact avec une face latérale de l'autre bague.

Dans un mode de réalisation, le bloc-capteur comprend une portion axiale en contact avec un organe d'étanchéité du roulement. La portion axiale du bloc-capteur peut être centrée radialement dans l'organe d'étanchéité et servir d'étanchéité au matériau de l'élément de liaison rapporté avant durcissement. On évite ainsi que le matériau rapporté se répande à proximité des éléments roulants.

Dans un mode de réalisation, le matériau rapporté de l'élément de liaison comprend une résine polymère thermodurcissable ou thermoplastique.

L'invention propose également un procédé de fixation d'un bloc-capteur sur une partie non tournante de roulement. On amène le bloc-capteur en contact avec la partie non tournante du roulement, on introduit un matériau durcissable à l'état malléable dans le bloc-capteur et en contact avec la partie non tournante, de telle sorte que lors du durcissement du matériau, ledit matériau assure par concordance de forme la fixation du bloc-capteur sur la partie non tournante. Le matériau durcissable peut également assurer l'étanchéité contre l'intrusion de pollutions extérieures. Le matériau durcissable peut être introduit à l'état liquide ou pâteux.

Le matériau durcissable peut être introduit par une fenêtre du bloc-capteur et venir en saillie dans une rainure de la partie non tournante. Le matériau durcissable peut venir en contact avec un organe d'étanchéité du roulement.

Le bloc-capteur peut être amené en contact avec une bague non tournante ou avec une pièce de la partie non tournante autre que la bague de roulement, par exemple un logement de roulement.

Dans un mode de réalisation, lors de la mise en contact du bloc-capteur avec le roulement, le bloc-capteur est centré contre un organe d'étanchéité du roulement.

En d'autres termes, le dispositif de palier instrumenté comprend une bague non tournante, un capteur non tournant, une bague tournante, un codeur tournant et au moins une rangée d'éléments roulants disposés entre deux chemins de roulement des bagues non tournante et tournante. Le capteur est fixé sur une pièce non tournante, notamment la bague non tournante. Le capteur comprend un élément de liaison en matériau synthétique et un bloc-capteur, l'élément de liaison étant rapporté sur le bloc-capteur pour assurer la fixation sur une face latérale de la pièce non tournante. L'élément de liaison assure, à l'état durci, la fixation du bloc-capteur sur la pièce non tournante par concordance de forme. Ladite concordance de forme garantit une excellente étanchéité, notamment contre l'intrusion de pollutions extérieures au cours de la vie du palier.

On peut ainsi fixer un capteur sur une pièce de la partie non tournante, par exemple la bague non tournante du roulement, de façon extrêmement fiable tout en assurant une étanchéité de très haut niveau.

La présente invention sera mieux comprise à l'étude de la description détaillée de quelques modes de réalisation pris à titre d'exemples et illustrés par les dessins annexés, sur lesquels :
- la figure 1 est une vue en coupe axiale d'un palier à roulement selon un mode de réalisation ;
- la figure 2 est une vue de face en élévation du capteur ;
- la figure 3 est une vue en perspective du capteur ;
- la figure 4 est une vue en perspective du bloc-capteur ;
- la figure 5 est une vue en coupe axiale du palier à roulement avant injection de l'élément de liaison ;
- la figure 6 est une vue de détail de la figure 1 ;
- la figure 7 montre une vue de la figure 6 suivant un autre plan de coupe ;
- la figure 8 est une vue en perspective de l'organe d'étanchéité.

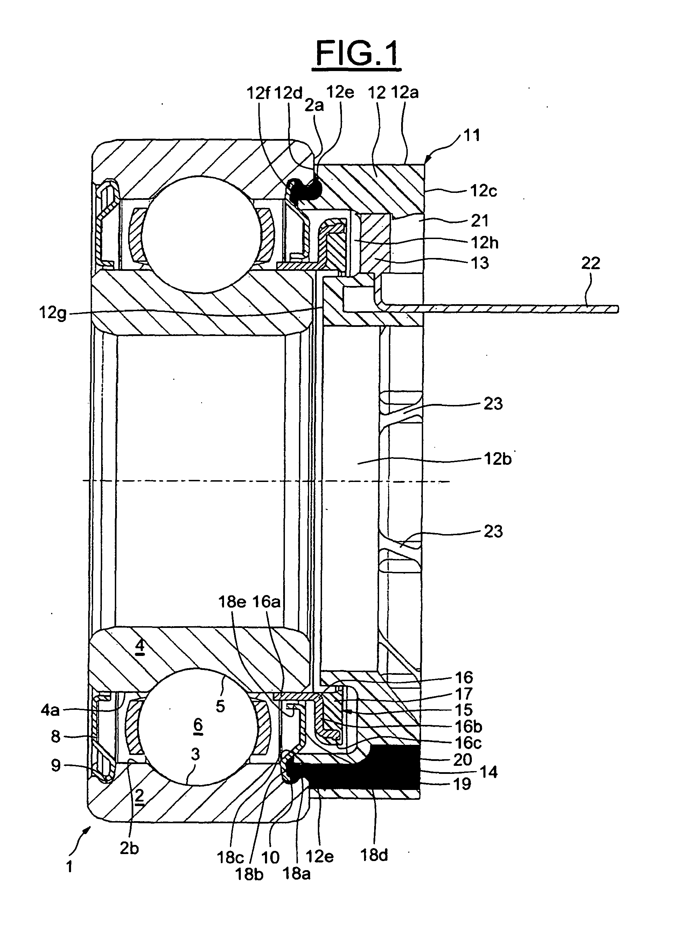

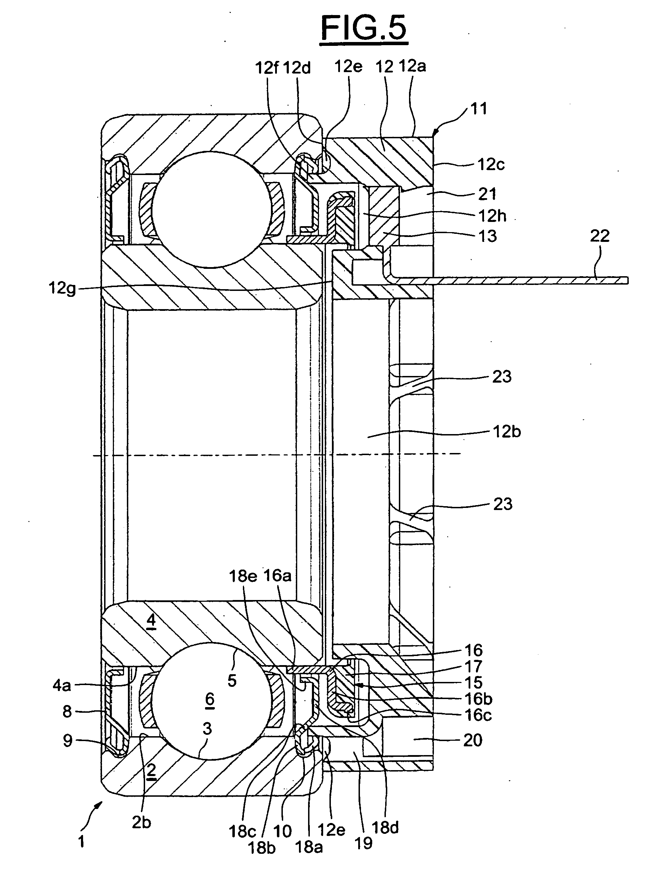

Comme on peut le voir sur les figures 1 et 5, un roulement 1 comprend une bague extérieure 2 pourvue d'un chemin de roulement 3, une bague intérieure 4 pourvue d'un chemin de roulement 5, une rangée d'éléments roulants 6, ici des billes, disposés entre les chemins de roulement 3 et 5, une cage de maintien de l'espacement circonférentiel des éléments roulants 6 et un joint d'étanchéité 8 monté sur la bague extérieure 2 et venant former un passage étroit avec une portée cylindrique 4a de la bague intérieure 4 tout en étant disposé radialement entre lesdites deux bagues 2 et 4 et axialement entre la rangée d'éléments roulants 6 et l'une des surfaces latérales desdites bagues 2, 4. Le joint d'étanchéité 8 est monté dans une rainure annulaire 9 formée dans la bague extérieure 2 à proximité de sa surface latérale radiale 2a. Du côté opposé, la bague extérieure 2 est également pourvue d'une rainure 10 symétrique à la rainure 9 par rapport à un plan passant par le centre des éléments roulants 6.

Les rainures 9 et 10 présentent des caractéristiques géométriquement identiques, ce qui permet l'utilisation d'un roulement standard.

La rainure 10 comprend une surface convexe 10a adjacente à la surface latérale radiale 2a, une surface concave 10b formant le fond de ladite rainure 10 et une surface sensiblement radiale 10c située du côté des éléments roulants 6 et se raccordant à l'alésage 2b de la bague extérieure 2.

Un ensemble capteur référencé 11 dans son ensemble est monté sur la bague extérieure 2 du côté de la rainure 10. L'ensemble capteur 11 comprend un bloc-capteur 12, au moins un élément capteur 13, et un élément de liaison 14 principalement logé dans le bloc-capteur 12.

Un codeur 15 est supporté par la bague intérieure 4. Le codeur 15 comprend un support 16 annulaire et une partie active 17. Le support 16 est de forme annulaire à section en S et comprend une portion axiale 16a emmanchée sur une portée cylindrique 4c de la bague intérieure 4, une portion radiale 16b s'étendant vers l'extérieur à partir de la portion axiale 16a et axialement légèrement décalée vers l'extérieur du roulement par rapport aux faces latérales des bagues 2 et 4, et un rebord axial 16c s'étendant à l'opposé des éléments roulants 6 et formant l'extrémité de grand diamètre du support 16.

La partie active 17 est de forme annulaire à section générale rectangulaire et peut être réalisée en plastoferrite ou en élastoferrite surmoulée sur le support 16. La partie active 17 recouvre le rebord axial 16c du support 16 et s'étend axialement à l'opposé des éléments roulants 6 à partir de la portion radiale 16b jusque légèrement au-delà du rebord axial 16c. La partie active 17 s'étend radialement à partir du diamètre extérieur de la bague intérieure 4 jusqu'à un diamètre extérieur de ladite partie active 17 légèrement supérieur au diamètre du rebord axial 16c.

Le roulement 1 comprend encore un élément d'étanchéité 18, se présentant sous la forme d'un flasque de forme générale semblable à celle de l'élément d'étanchéité 8. L'organe d'étanchéité 18 présente un alésage de diamètre supérieur à celui de l'organe d'étanchéité 8, dans la mesure où la portion de petit diamètre dudit organe d'étanchéité 18 forme un passage étroit avec la portion axiale 16a du support 16 du codeur 15. Les organes d'étanchéité 8 et 18 sont fixés par leur périphérie dans les rainures annulaires 9 et 10 de la bague extérieure 2. La zone périphérique des organes d'étanchéité 8 et 18 est repliée vers l'intérieur et est fractionnée en languettes séparées par des fentes, lesdites languettes pouvant fléchir légèrement à partir de cette zone périphérique. Chaque organe d'étanchéité 8, 18 est positionné dans la rainure correspondante 9, 10 et serti au moyen d'un outil qui refoule lesdites languettes dans la rainure correspondante 9, 10, assurant ainsi un ancrage mécanique ferme du flasque dans la rainure, aussi bien axialement que circonférentiellement.

Avantageusement, les parties périphériques externes des éléments 8 et 18 sont identiques. Comme les rainures 9 et 10 sont géométriquement identiques, on peut donc utiliser le même outil pour sortir les organes d'étanchéité 8 et 18.

Le bloc-capteur 12 peut être réalisé en matériau synthétique ou encore en alliage léger et présente une surface extérieure cylindrique 12a radialement en retrait par rapport à la surface extérieure de la bague extérieure 2, un alésage 12b de diamètre légèrement supérieur à celui de l'alésage de la bague intérieure 4, une surface latérale extérieure 12c radiale disposée du côté opposé aux éléments roulants 6, une surface d'appui 12d de forme générale annulaire, de faible dimension radiale, en contact avec la surface radiale correspondante de la bague extérieure 2, une rainure annulaire 12e de diamètre légèrement inférieur à celui de la surface de contact 12d, une saillie axiale 12f en contact avec l'organe d'étanchéité 18, de telle sorte que la rainure 12e du bloc-capteur 12 et la rainure 10 dans laquelle est fixé l'organe d'étanchéité 18 soient en communication et soient obturées vers l'extérieur par le contact entre la surface radiale de contact 12d et la bague extérieure 2 et du côté intérieur par le contact entre la saillie axiale annulaire 12f et l'organe d'étanchéité 18.

Le bloc-capteur 12 comprend également une surface radiale 12g située radialement sensiblement au niveau de la bague intérieure 4 et s'étendant vers l'extérieur à partir de l'alésage 12b. La surface radiale 12g est située à une faible distance de la surface latérale correspondante de la bague intérieure 4 et vient jusqu'à une faible distance de l'alésage du codeur 15. Le bloc-capteur 12 se complète par une rainure annulaire 12h présentant des dimensions axiale et radiale relativement importantes et nettement supérieures à celles de la rainure 12e. La rainure 12h présente une dimension radiale du même ordre de grandeur que l'espace radial séparant la surface extérieure de la bague intérieure 4 et l'alésage de la bague extérieure 2, de telle sorte que la partie active 17 du codeur 15 est disposée dans ladite rainure 12h avec un faible entrefer entre ladite partie active 17 et l'élément capteur 13 disposé dans le fond de la rainure 12h du bloc-capteur 12.

Le bloc-capteur 12 comprend également une pluralité d'orifices 19 circonférentiellement régulièrement espacés, s'étendant selon une direction principale axiale et débouchant d'un côté dans la rainure 12e et de l'autre côté dans une rainure annulaire 20 débouchant elle-même sur la surface radiale extérieure 12c du bloc-capteur 12. La rainure 20 est interrompue sur un faible secteur angulaire au niveau d'éléments capteurs 13. En effet, un logement 21 pour le capteur 13 est ménagé dans ledit bloc-capteur 12 également à partir de la surface radiale extérieure 12c, le logement 21 permettant également de loger la sortie d'éléments conducteurs de connexion 22 reliés au capteur 13. A cet effet, l'on voit que la surface radiale extérieure 12c présente des dimensions radiales plus importantes au niveau du logement 21, afin de laisser des épaisseurs de paroi suffisantes pour la solidité du bloc-capteur 12.

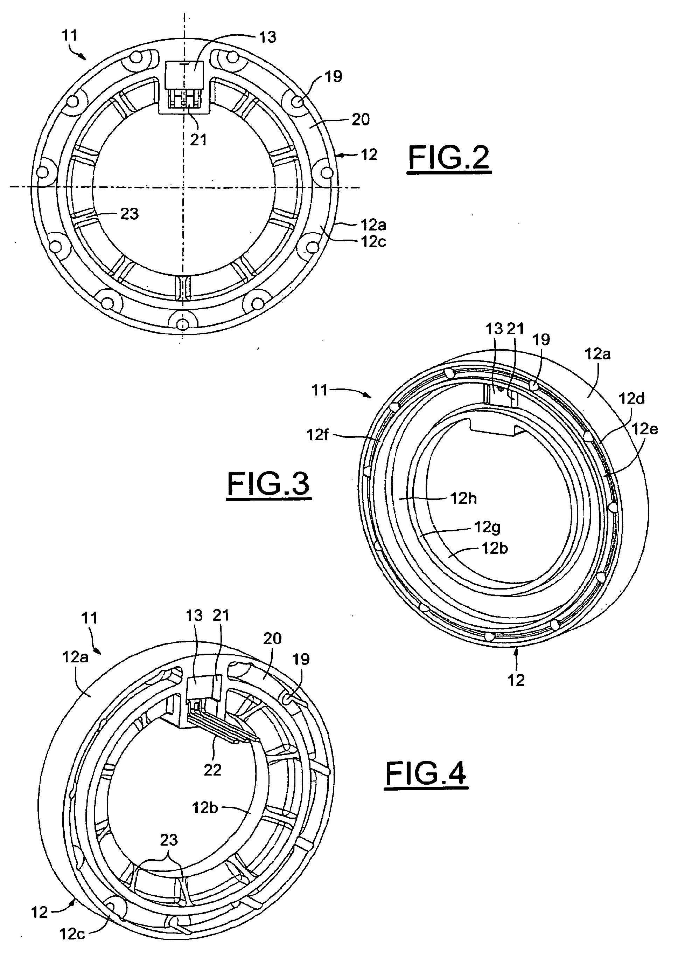

Comme on peut le voir sur les figures 1, 2, 4 et 5, le bloc-capteur comprend également des renforts 23 sous forme de nervures disposées en rayons de roue et permettant de renforcer la structure du bloc-capteur 12 sans accroître excessivement la quantité de matière utilisée pour former ledit bloc-capteur 12 et sans l'alourdir exagérément.

Dans l'état illustré sur la figure 5, le bloc-capteur est présenté appuyé contre la bague extérieure 4 et l'organe d'étanchéité 18 avant l'injection de l'élément de liaison 14 réalisé en matériau durcissable, par exemple une résine polymérisable. Ledit matériau peut être injecté à l'état plastique plus ou moins fluide à partir d'un outil présentant une buse annulaire en concordance de forme avec la rainure 20 ménagée à partir de la surface radiale extérieure 12c du bloc-capteur 12 et donc extrêmement facile d'accès du côté opposé aux éléments roulants 6.

L'organe d'étanchéité 18 comprend des languettes découpées 18a serties dans la rainure 10 en contact avec la surface concave 10b, une partie sensiblement radiale 18b en contact avec la surface oblique 10c de la rainure située du côté des éléments roulants 6, une portion tronconique 18c s'étendant radialement vers l'extérieur et axialement à l'opposé des éléments roulants 6, une portion radiale 18d s'étendant vers l'extérieur, sensiblement au niveau de la portion radiale 16b du support 16 de l'élément codeur 15, et un rebord axial 18e dirigé en direction des éléments roulants 6 et formant l'extrémité libre de l'organe d'étanchéité 18. Le rebord axial 18e est situé parallèlement et à une faible distance de la partie axiale 16a du support 16 du codeur 15 avec lequel il forme une étanchéité par passage étroit.

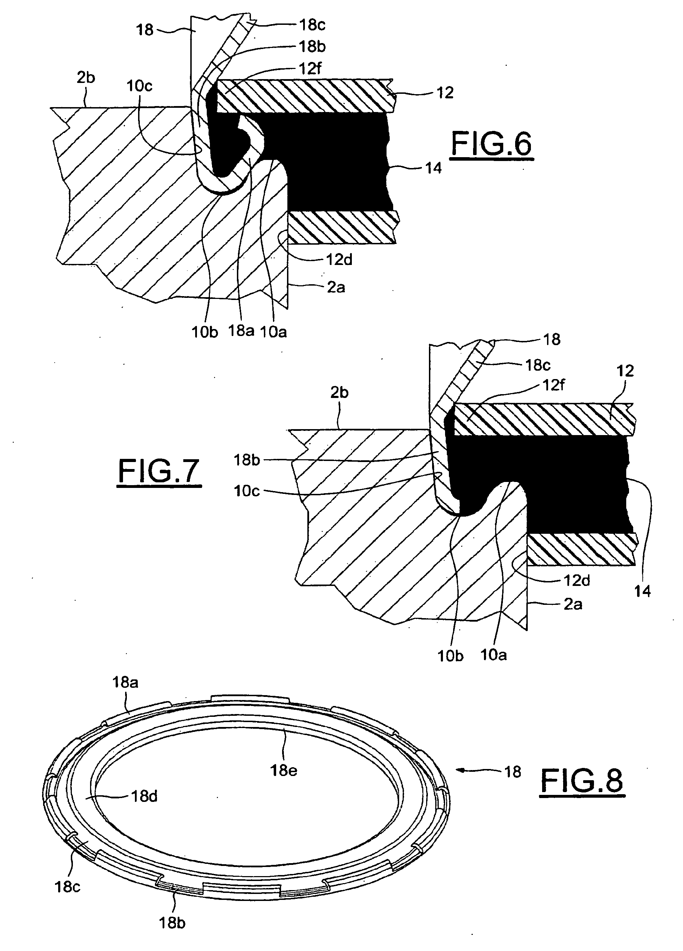

Comme on le voit plus particulièrement sur la figure 6, lors de l'injection du matériau durcissable destiné à former l'élément de liaison 14, ledit matériau se répartit dans les orifices 19 et dans la rainure annulaire 12e, remplissant ainsi l'ensemble de la rainure 10 de la bague extérieure 2 et de la rainure 12e du bloc-capteur 12 tout en étant limité par le contact entre la surface radiale de contact 12d du bloc-capteur et la bague extérieure 2 et par le contact entre la saillie axiale 12f et la portion oblique 18c de l'organe d'étanchéité 18. Après durcissement, l'élément de liaison 14 ainsi formé vient s'ancrer à la fois dans la rainure 10 et sur les languettes 18a de l'organe d'étanchéité 18, assurant ainsi une liaison rigide indémontable et étanche entre la bague extérieure 2 du roulement 1 et le bloc capteur.

Le matériau durcissable pourra être un matériau polymère présentant au moment de son introduction dans le bloc capteur une structure malléable pâteuse au liquide afin de pouvoir épouser toutes les surfaces internes du bloc capteur, pénétrer à travers les orifices 19 et se répartir dans la rainure 10 de la bague extérieure 2.

On pourra par exemple utiliser une matière thermodurcissable telle qu'une résine époxyde ou phénolique qui se présente à l'état liquide ou visqueux au moment de sa mise en place à température ambiante et qui polymérise ensuite avec un durcissement, le temps de durcissement pouvant être réduit par une augmentation de la température.

On peut également envisager l'utilisation de thermoplastiques tels que des polyamides que l'on chauffe et que l'on introduit en phase liquide ou visqueuse dans le bloc capteur au moyen d'une presse, le durcissement s'effectuant par refroidissement.

Le matériau durcissable pourra éventuellement être chargé d'additifs organiques ou inorganiques destinés à renforcer sa structure après durcissement.

Grâce à l'invention, on réalise ainsi une liaison efficace entre le bloc capteur et la bague non tournante du palier à roulement tout en conservant un élément d'étanchéité isolant parfaitement l'intérieur du roulement du système de détection et du milieu extérieur.

L'invention permet également d'utiliser une bague extérieure du roulement pourvue de rainures standard prévues initialement pour la fixation d'éléments d'étanchéité standard.

Il n'y a donc aucun surcoût d'usinage au niveau de la bague du roulement.

## Revendications

1. Dispositif de palier à roulement instrumenté, du type pourvu d'une partie non tournante comprenant une bague non tournante (2), et un capteur (11), d'une partie tournante comprenant une bague tournante (4) et un codeur (15), et d'éléments roulants (6) disposés entre les bagues, le capteur (11) comprenant un bloc-capteur (12) et étant supporté par la partie non tournante, **caractérisé par le fait que** le bloc-capteur (12) est fixé sur une face latérale de la partie non tournante par un élément de liaison (14) comportant un matériau rapporté à l'état plastique sur le bloc-capteur et assurant, à l'état durci, la fixation du bloc-capteur sur la partie non tournante en coopérant par complémentarité de forme à la fois avec des surfaces du bloc capteur et des surfaces de la partie non tournante.

2. Dispositif selon la revendication 1, dans lequel le bloc-capteur (12) comporte des orifices (19) débouchant dans une rainure de la partie non tournante, ledit élément de liaison (14) étant disposé dans les orifices.

3. Dispositif selon la revendication 2, dans lequel la rainure supporte un organe d'étanchéité (18) du roulement.

4. Dispositif selon la revendication 2 ou 3, dans lequel les orifices (19) sont ménagés à partir d'une partie évidée du bloc-capteur ouverte sur une face extérieure de la partie non tournante.

5. Dispositif selon l'une quelconque des revendications précédentes, dans lequel le bloc-capteur (12) comprend une face d'appui en contact avec une face latérale de la partie non tournante.

6. Dispositif selon l'une quelconque des revendications précédentes, dans lequel le bloc-capteur (12) comprend une portion axiale en contact avec un organe d'étanchéité (18) du roulement.

7. Dispositif selon la revendication 6, dans lequel la portion axiale du bloc-capteur (12) est centrée radialement dans ledit organe d'étanchéité (18) et sert d'étanchéité au matériau rapporté avant durcissement.

8. Dispositif selon l'une quelconque des revendications précédentes, dans lequel le matériau de l'élément de liaison (14) comprend une résine polymère thermodurcissable.

9. Dispositif selon l'une quelconque des revendications 1 à 8,
dans lequel le matériau de l'élément de liaison (14) comprend une résine polymère thermoplastique.

10. Procédé de fixation d'un bloc-capteur (12) sur un roulement (4),
dans lequel on amène ledit bloc-capteur en contact avec la partie tournante (14) du roulement, on introduit un matériau durcissable (14) à l'état malléable dans le bloc-capteur et en contact avec une partie non tournante (12) du roulement de telle sorte que lors du durcissement du matériau, ledit matériau assure par concordance de forme la fixation du bloc-capteur sur la partie non tournante.

11. Procédé selon la revendication 10, dans lequel le matériau durcissable (14) est introduit par une fenêtre du bloc-capteur (12) et vient en saillie dans une rainure (10) de la partie non tournante (2).

12. Procédé selon la revendication 11, dans lequel le matériau (14) vient en contact avec un organe d'étanchéité (18) du roulement.

13. Procédé selon l'une quelconque des revendications 10 à 12, dans lequel lors de la mise en contact du bloc-capteur (12) avec le roulement (1), le bloc-capteur est centré contre un organe d'étanchéité (18) du roulement.

## Claims

1. - Instrumented rolling bearing device, of the type provided with a non-rotating part comprising a non-rotating ring (2) and a sensor (11), a rotating part comprising a rotating ring (4) and an encoder (15), and rolling elements (6) positioned between the rings, the sensor (11) comprising a sensor unit (12) and being supported by the non-rotating part, **characterized in that** the sensor unit (12) is fixed to a lateral face of the non-rotating part by a connecting element (14) comprising a material applied in the plastic state to the sensor unit and, in the hardened state, fixing the sensor unit to the non-rotating part and interacting by shape matching with surfaces of the sensor unit and surfaces of the non-rotating part.

2. - Device according to Claim 1, in which the sensor unit (12) has orifices (19) opening into a groove in the non-rotating part, the said connecting element (14) being positioned in the orifices.

3. - Device according to Claim 2, in which the groove supports a sealing member (18) of the bearing.

4. - Device according to Claim 2 or 3, in which the orifices (19) are formed from a hollowed part of the sensor unit opening on to an outer face of the non-rotating part.

5. - Device according to any one of the preceding claims, in which the sensor unit (12) comprises a supporting face in contact with a lateral face of the non-rotating part.

6. - Device according to any one of the preceding claims, in which the sensor unit (12) comprises an axial portion in contact with a sealing member (18) of the bearing.

7. - Device according to Claim 6, in which the axial portion of the sensor unit (12) is radially centred in the said sealing member (18) and serves to seal the applied material before hardening.

8. - Device according to any one of the preceding claims, in which the material of the connecting element (14) comprises a thermosetting polymer resin.

9. - Device according to any one of Claims 1 to 8, in which the material of the connecting element (14) comprises a thermoplastic polymer resin.

10. - Method for fixing a sensor unit (12) to a bearing (1), in which the said sensor unit is brought into contact with the rotating part (4) of the bearing, a hardenable material (14) in the malleable state is introduced into the sensor unit and brought into contact with a non-rotating part (2) of the bearing in such a way that, when the material is hardened, the said material fixes the sensor unit to the non-rotating part by shape matching.

11. - Method according to Claim 10, in which the hardenable material (14) is introduced through an aperture in the sensor unit (12) and projects into a groove (10) of the non-rotating part (12).

12. - Method according to Claim 11, in which the material (14) comes into contact with a sealing member (18) of the bearing.

13. - Method according to any one of Claims 10 to 12, in which, when the sensor unit (12) is brought into contact with the bearing (1), the sensor unit is centred against a sealing member (18) of the bearing.

## Patentansprüche

1. Instrumentierte Wälzlagervorrichtung von dem Typ, der mit einem nicht-drehenden Teil, der einen nicht-drehenden Ring (2) und einen Sensor (11) aufweist, einem drehenden Teil, der einen drehenden Ring (4) und einen Codierer (15) aufweist, und mit rollenden Elementen (6) versehen ist, die zwischen den Ringen angeordnet sind, wobei der Sensor (11) einen Sensorblock (12) aufweist und von dem nicht-drehenden Teil getragen wird, **dadurch gekennzeichnet, dass** der Sensorblock (12) an einer Seitenfläche des nicht-drehenden Teils durch ein Verbindungselement (14) befestigt ist, das einen im plastischen Zustand in den Sensorblock eingebrachten Werkstoff aufweist, der im gehärteten Zustand die Befestigung des Sensorblocks auf dem nicht-drehenden Teil gewährleistet, indem er durch Formkomplementarität sowohl mit Flächen des Sensorblocks als auch mit Flächen des nicht-drehenden Teils zusammenwirkt.

2. Vorrichtung nach Anspruch 1, bei der der Sensorblock (12) Öffnungen (19) aufweist, die in eine Rille des nicht-drehenden Teils münden, wobei das Verbindungselement (14) in den Öffnungen angeordnet ist.

3. Vorrichtung nach Anspruch 2, bei der die Rille ein Dichtorgan (18) des Lagers trägt.

4. Vorrichtung nach Anspruch 2 oder 3, bei der die Öffnungen (19) ausgehend von einem ausgehöhlten Teil des Sensorblocks ausgespart sind, der auf eine Außenseite des nicht-drehenden Teils offen ist.

5. Vorrichtung nach einem der vorhergehenden Ansprüche, bei der der Sensorblock (12) eine Auflagefläche in Kontakt mit einer Seitenfläche des nicht-drehenden Teils aufweist.

6. Vorrichtung nach einem der vorhergehenden Ansprüche, bei der der Sensorblock (12) einen axialen Abschnitt in Kontakt mit einem Dichtorgan (18) des Lagers aufweist.

7. Vorrichtung nach Anspruch 6, bei der der axiale Abschnitt des Sensorblocks (12) radial in dem Dichtorgan (18) zentriert ist und als Dichtung für den eingebrachten Werkstoff vor dem Härten dient.

8. Vorrichtung nach einem der vorhergehenden Ansprüche, bei der der Werkstoff des Verbindungselements (14) ein wärmehärtbares Polymerharz enthält.

9. Vorrichtung nach einem der Ansprüche 1 bis 8, bei der der Werkstoff des Verbindungselements (14) ein thermoplastisches Polymerharz enthält.

10. Verfahren zur Befestigung eines Sensorblocks (12) auf einem Lager (1), bei dem der Sensorblock mit dem drehenden Teil (4) des Lagers in Kontakt gebracht wird, ein härtbarer Werkstoff (14) im verformbaren Zustand in den Sensorblock und mit einem nicht-drehenden Teil (2) des Lagers in Kontakt gebracht wird, so dass beim Härten des Werkstoffs der Werkstoff durch Formübereinstimmung die Befestigung des Sensorblocks auf dem nicht-drehenden Teil gewährleistet.

11. Verfahren nach Anspruch 10, bei dem der härtbare Werkstoff (14) durch ein Fenster des Sensorblocks (12) eingeführt wird und in eine Rille (10) des nicht-drehenden Teils (2) vorsteht.

12. Verfahren nach Anspruch 11, bei dem der Werkstoff (14) mit einem Dichtorgan (18) des Lagers in Kontakt kommt.

13. Verfahren nach einem der Ansprüche 10 bis 12, bei dem beim Inkontaktbringen des Sensorblocks (12) mit dem Lager (1) der Sensorblock gegen ein Dichtorgan (18) des Lagers zentriert wird.
